# EUROPEAN PATENT SPECIFICATION

(11) **EP 1 953 090 B1**
(45) Date of publication and mention of the grant of the patent: **09.09.2009**
(21) Application number: 07113146.0
(22) Date of filing: 25.07.2007
(51) Int. Cl.: B65B 23/12, B65B 23/14, B65B 35/44, B65B 35/50, B65G 19/02, B65G 47/08, B65G 59/06, B65G 57/32

(54) **A device for forming groups of products**
Vorrichtung zum Gruppieren von Gegenständen
Dispositif pour former des groupes de produits

(30) Priority: 05.02.2007 IT TO20070083
(43) Date of publication of application: 06.08.2008
(73) Proprietor: Cavanna S.p.A., 28077 Prato Sesia (NO) (IT)
(72) Inventor: Brolli, Elio, 13861 Ailoche (Biella) (IT)
(74) Representative: Marchitelli, Mauro

(56) References cited:
- EP-A- 1 348 629
- CH-A- 521 265
- GB-A- 2 296 914
- NL-C1- 1 019 940
- US-A- 2 872 020

## Description

The present invention relates in general to automatic plants for packaging products, in particular foodstuff products, such as, for example, biscuits or the like.

More precisely, the invention regards a device for forming groups of products, in which each group is constituted by a pre-set number of products.

Just to fix ideas, reference may be made to biscuits of a flat shape set on top of one another or up against one another so as to form blocks of products (usually referred to as "slugs"), which are to be enclosed in a wrapping of packaging material.

Usually, the individual products that are to be grouped together are fed into a packaging station in the form of one or more continuous arrays of products stacked on top of one another or set up against one another. To form the packages, there is hence necessary a preliminary operation in which, starting from a number of continuous arrays of products stacked on top of or set up against one another, successive groups of products are formed, in which each group is formed by a pre-set number of products.

In order to be certain that each group of products is always constituted by the same number of products, it is necessary to draw off individually the products from the continuous arrays and then arrange a pre-set number of products so that they are set alongside or up against one another in order to form a group or slug to be packaged.

The object of the present invention is to provide a simple and compact device that will enable division of a plurality of continuous arrays of products into groups constituted by a pre-set number of products. A further object of the present invention is to provide a device of this type that will present a high productivity and that will be able to operate reducing to the minimum the risk of damaging the products.

The characteristics and advantages of the device according to the present invention will emerge clearly in the course of the following detailed description, which is provided purely by way of non-limiting example, with reference to the attached drawings, in which:
- Figure 1 is a plan view of a device according to the present invention;
- Figures 2 and 3 are views in elevation respectively according to the arrows II and III of Figure 1; and
- Figure 4 is a detail at an enlarged scale of the part indicated by the arrow IV in Figure 3.

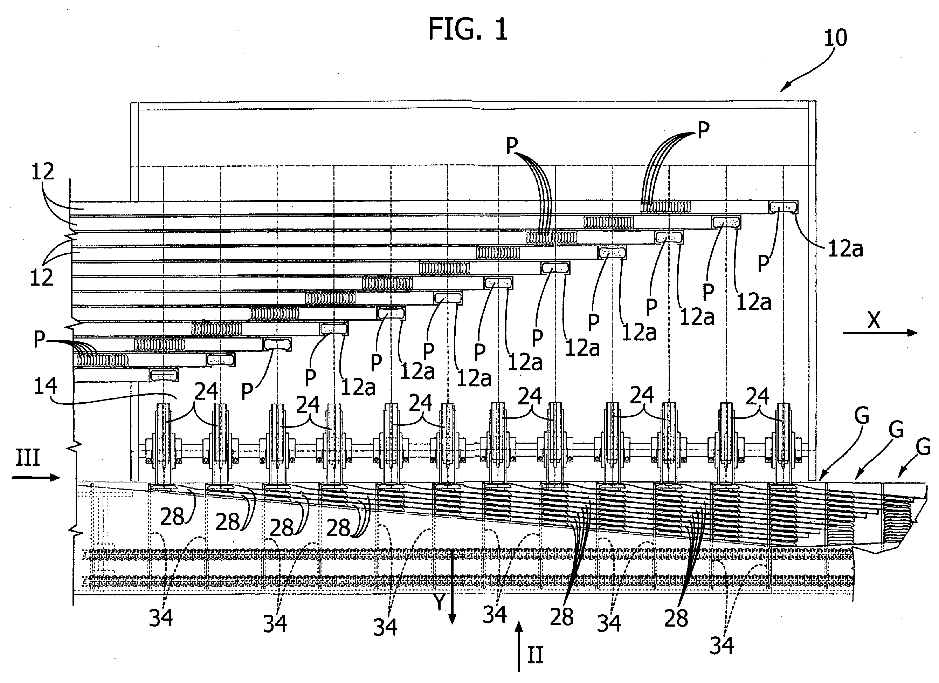

With reference to Figures 1 to 3, designated by 10 is a device according to the present invention for forming groups of products, in which each group is constituted by a pre-set number of products. In the figures, the individual products are designated by P and the groups of products are designated by G. The figures refer to products P with a general flat shape elongated in a longitudinal direction. Each product P has two opposed main faces, one of which is concave and the other convex. Each product P has in plan view a generally elongated rectangular shape. Even though the device according to the present invention has been developed principally for products with the above geometrical characteristics, it is understood that the present invention can be applied in the case of products of any shape. In general, the present invention is applicable in all the cases in which it is desired to obtain groups formed by a pre-set number of products starting from continuous arrays of products.

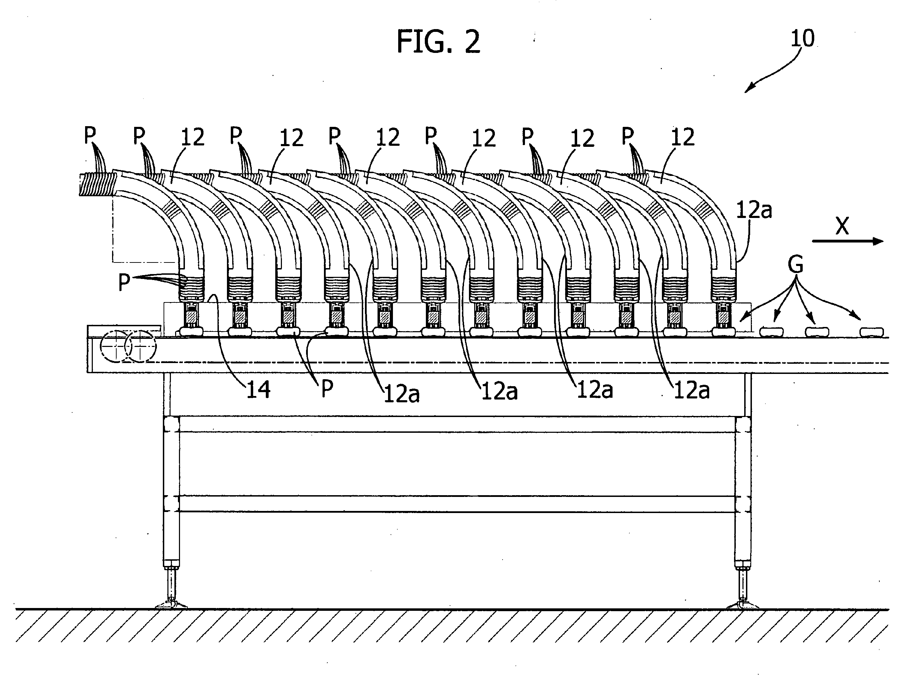

The device 10 comprises a plurality of first stationary guides 12, which extend parallel to one another in a longitudinal direction X. The products P are arranged in the first guides 12 set up against one another, in a substantially vertical position, i.e., with the minor sides horizontal and the major sides substantially vertical. The products P in the first guides 12 form respective continuous arrays in which the convex face of each product P is in contact with the concave face of the immediately subsequent product and in which the concave face of the same product P is in contact with the convex face of the immediately preceding product. The continuous arrays of products P advance in the stationary guides 12 in the direction indicated by the arrow X in Figures 1 and 2, with the concave faces of the products facing forwards with reference to the direction of feed. The means that enable advance of the products P along the stationary guides 12 can be of any type known in the art.

The first guides 12 have respective terminal portions 12a, which extend from top downwards. The bottom ends of the terminal portions 12 extend in a vertical or substantially vertical direction. The products P move by gravity along the respective terminal portions 12a in which they form continuous stacks of products. In the terminal portions 12a of the first guides 12 the products P are arranged with the concave surfaces facing downwards and with the convex surfaces facing upwards. The products P that are located at the bottom of the respective stacks in the terminal portions 12a of the first guides 12 rest on a stationary surface 14.

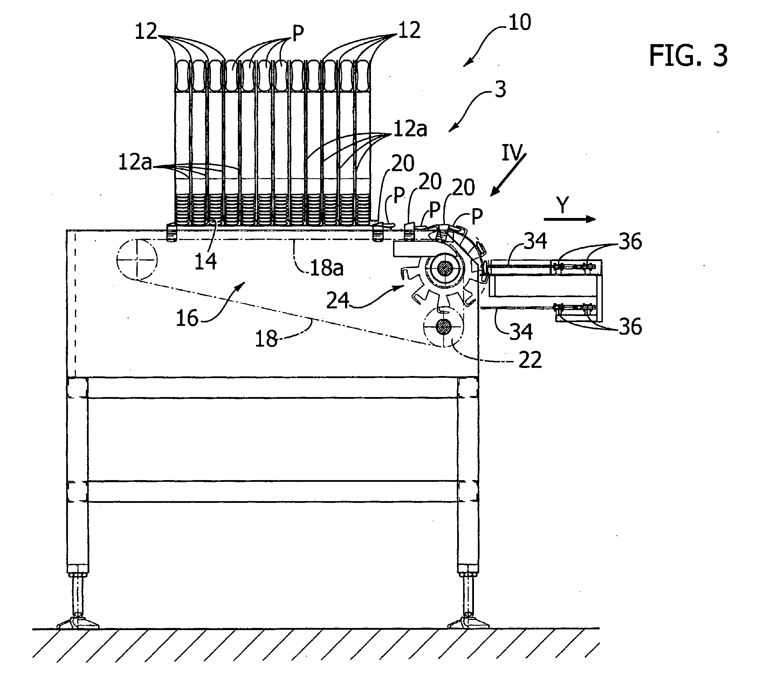

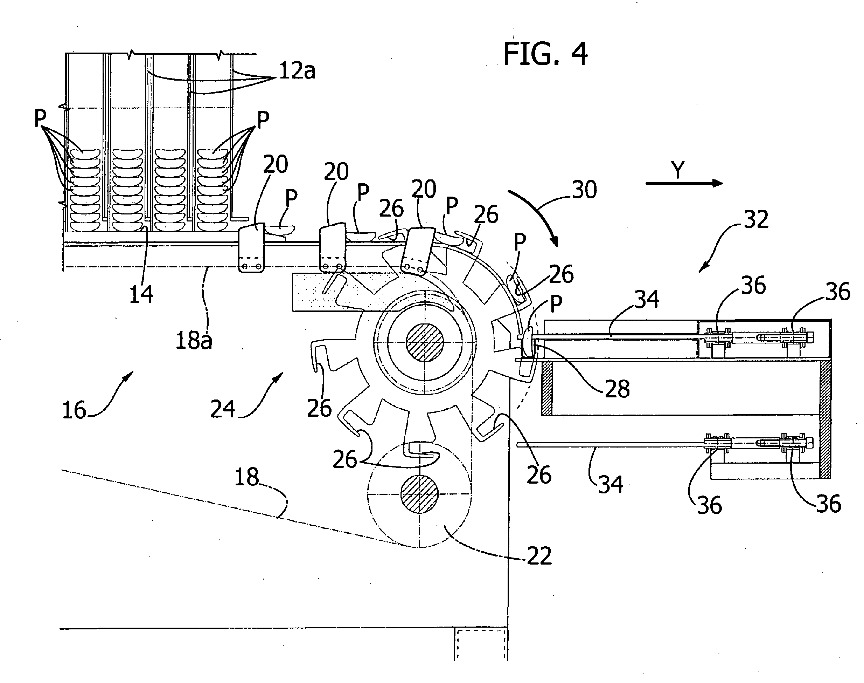

With reference to Figures 3 and 4, the device 10 comprises a plurality of extractor devices 16, each of which is associated to a respective terminal portion 12a. The extractor devices 16 are designed to extract individually the products P at the bottom end of the terminal portions 12A of the first guides 12. The extractor devices 16 cause the individual products to advance so that they are spaced apart from one another in a transverse direction Y, orthogonal with respect to the direction of advance X of the continuous arrays of products inside the first guides 12. Each extractor device can be made as described in detail in the patent application No. T02006A00090, in the name of the present applicant.

As may be seen in Figure 1, the terminal portions 12a of the first guides 12 are spaced apart from one another in the longitudinal direction X. The extractor devices 16 are arranged parallel to one another and mutually spaced apart in the direction X. With reference to Figures 3 and 4, each extractor device 16 comprises a flexible transmission member 18, such as, for example, a belt or a chain, having a top rectilinear branch 18a, which extends in the transverse direction Y underneath the stationary surface 14 on which the continuous stacks of products P rest arranged in the terminal portions 12a of the first guides 12. Each extractor device 16 comprises a plurality of extractor elements 20 spaced apart from one another along the flexible transmission member 18. Each extractor element 20 has a portion that projects above the surface 14. As described in detail in the aforementioned patent application of the name of the present applicant, each extractor device 16 removes individually the products P that each time are located at the base of the respective terminal portion 12a and conveys the individual products P so that they are spaced apart from one another in the transverse direction Y. As the products P are extracted at the bottom end of the terminal portion 12a, the stack of products contained in the terminal portion 12a advances in stepwise fashion from the top downwards. The extractor elements 20 are spaced at equal distances apart from one another along the respective flexible transmission member so that continuous actuation of the flexible transmission member 18, obtained for example by means of a motor-driven wheel or pulley 22, enables a continuous flow of individual products P, which advance spaced at equal distances apart from one another in the direction Y.

With reference to Figures 3 and 4, each extractor device 16 is associated to a respective wheel 24, which is able to rotate about a longitudinal axis parallel to the direction X. As is illustrated in Figure 1, the wheels 24 associated to the various extractor devices 16 are set parallel to one another and spaced apart from one another in the direction X. Preferably, the wheels 24 are mounted coaxially on one and the same shaft 26.

With reference in particular to Figure 4, each wheel 24 comprises a plurality of seats 26 spaced at equal distances apart from one another in a circumferencial direction. Each seat is designed to receive a respective product P. Once again with reference to Figure 4, each wheel 24 is associated to a respective second guide 28, which extends in a direction slightly divergent with respect to the axis of rotation of the wheel 24. Each second guide 28 is substantially U-shaped and is designed to receive the products P coming from the wheel 24, in the way that will be described in what follows.

With reference to Figure 1, each wheel 24 is associated to a respective second guide 28. The guides 28 associated to the various wheels 24 are parallel to one another and set alongside one another. Each guide 28 starts in a position corresponding to the respective wheel 24 and progressively sets itself alongside the guides 28 corresponding to the subsequent wheels 24. The first wheel 24 on the left in Figure 1 faces just one guide 28. The immediately subsequent wheel 24 faces two second guides 28, and so on. The wheel 24 furthest to the right in Figure 1 faces a number of second guides 28 equal to the number of the wheels 24. This number is equal to the maximum number of products P forming each group G. As may be seen in Figure 1, the guides 28 are slightly inclined with respect to the axis of rotation of the wheels 24 to enable the various guides 28 to set themselves progressively alongside one another in the transverse direction Y.

With reference to Figure 4, the products P that advance in the direction Y pushed by the extractor elements 20 of the extractor device 16 are pushed into the seats 26 of the wheel 24. Said seats are open in the direction opposite to the direction of rotation of the wheel 24, indicated by the arrow 30. As a result of the rotation of the wheel 24, the products P are turned over through 90° and are deposited in the respective guides 28 in a position rotated substantially of 90° with respect to the position in which the products are stacked in the terminal portions 12a of the first guides 12. Each product P is set in the respective second guide 28 with its own minor sides vertical and with its major sides substantially horizontal. Each wheel 24 is preferably formed by two thin parallel disks spaced apart from one another in the direction of the axis of rotation of the wheel. Said disks rotate within respective slits formed in the respective second guide 28. Each second guide 28 has a portion for receiving the products, which is set along the path of the seats 26 of the respective wheel 24. Consequently, the products P contained in the seats 26 of the wheel 24 are deposited in succession in the respective guide 28. As soon as a product 28 is deposited on the guide 28, it is moved in the direction X by means of a conveyor device 32 associated to the second guides 28.

With reference to Figures 1 and 4, the conveyor 32 comprises a plurality of thrust elements 34 parallel to one another and mobile in the longitudinal direction X. Each thrust element 34 is preferably made in the form of a bar, which extends in the transverse direction X. The thrust elements 34 are fixed at one of their ends to a pair of motor-driven chains 36. The thrust elements 34 project in cantilever fashion from the chains 36 and have their own free end which extends slightly above the second guides 28 so as to come into contact with the portions of the products P that project above the second guide 28. Each thrust element 34 engages simultaneously all the products P set alongside one another in the various guides 28. As a thrust element 34 moves from left to right in the representation of Figure 1, it collects a new product at each wheel 34, and said product advances set alongside the other products drawn along in the direction X by the same thrust element 34. The movement of advance of the thrust elements 34 in the direction X is synchronized with the movement of rotation of the wheels 24. In particular, the time taken by each thrust element 34 for displacing from one wheel 24 to the next is equal to the time taken by the wheel 24 to cover the angle of rotation between two successive seats 26. The movement of the thrust members 34 and of the wheels 24 is moreover phased in such a way that, as soon as a seat 26 of the wheel 24 deposits a product P on the corresponding second guide 28, a thrust element 34 removes the product P before a subsequent product reaches the guide 28.

The products P advance along the second guides 28 so that they are set alongside one another. As may be seen in Figure 1, the second guides 28 terminate just beyond the last wheel 24 with reference to the direction of advance of the products along the guides 28. Preferably, the terminal ends of the second guides 28 are staggered with respect to one another in the direction of advance of the products. As the guides 28 terminate, the products are brought into contact with one another thanks to two side members 38. At this point, the individual products P are grouped together into a group G formed by a pre-set number of products P. The side members 38 guide and contain the groups G in a lateral direction. The groups G are then sent to a packaging station (not illustrated), in which they are packaged individually.

The number of the wheels 24 is equal to the number of the second guides 28, to the number of the first guides 12, and to the number of the extractor devices 16. This number corresponds to the maximum number of products P that make up each group G. The number of products that make up each group G can be reduced with respect to said maximum number so as to vary the pre-set number of products contained in each package. The variation in the number of products that make up each group can be obtained by interrupting cyclically supply of the products P in the respective terminal portions 12a of the guides 12. This entails cyclic absence of one or more products in the second guides 28, which entails a reduction in the number of products that make up each group G. The temporary and cyclic arrest of supply of the products in the terminal portions 12a can be obtained by means of a retention element set at the base of each terminal portion 12a, which can be raised temporarily with respect to the resting surface 14 so as to prevent temporarily descent of the respective stack of the products P.

Of course, without prejudice to the principle of the invention, the details of construction and the embodiments may vary widely with respect to what is described and illustrated herein, without thereby departing from the scope of the present invention, as defined in the ensuing claims.

## Claims

1. A device for forming groups of products (G) constituted by a pre-set number of products (P), comprising:
- a plurality of first stationary guides (12), along which respective arrays of products (P) advance with the products set up against one another or stacked on top of one another, each of said first guides (12) having a terminal portion (12a) which extends from the top downwards with reference to the direction of advance of the products (P);
- a plurality of extractor devices (16), arranged so as to extract the products (P) individually at the bottom end of said terminal portions (12a) and for causing advance of the individual products (P) so that they are set at a distance from one another;
- a plurality of wheels (24), associated to respective extractor devices (16), wherein each of said wheels is able to rotate about a horizontal axis and is provided with a plurality of seats (26) spaced apart from one another in a circumferencial direction, each of said seats (26) being designed to receive a respective product (P) coming from the respective extractor device (16); and
- a plurality of second stationary guides (28), associated to a device for causing advance of the products (32), wherein in each of said second guides (28) there are deposited in succession the products (P) from a respective wheel (24) and wherein the products (P) deposited in one of said second guides (28) are set alongside the products advancing in the other second guides (28) so as to form successive groups (G) of products.

2. The device according to Claim 1, **characterized in that** said device for advance of the products (32) along the second guides (28) comprises a plurality of thrust elements (34), which are mobile in a longitudinal direction (X) and the movement of which is synchronized and phased with the movement of rotation of said wheels (24).

3. The device according to Claim 1, **characterized in that** said extractor devices (16) are arranged for causing the products (P) to advance in a transverse direction (Y) with respect to a longitudinal direction (X) in which the continuous arrays of products (P) advance along said first guides (12).

4. The device according to Claim 3, **characterized in that** said second guides (28) are arranged for causing the products (P) to advance in a direction substantially parallel to said longitudinal direction (X).

5. The device according to Claim 1, **characterized in that** said wheels (24) are arranged for rotating the products (P) substantially of 90° between the position where the products are received by the respective extractor devices (16) and the position where the products are released into the respective second guides (28).

6. The device according to Claim 1, **characterized in that** each of said second guides (28) has a portion for receiving the products, which is set on the path of movement of the seats (26) of the respective wheel (24).

7. The device according to Claim 1, **characterized in that** each of said wheels (24) comprises a pair of thin disks parallel to one another and spaced apart from one another in the direction of the axis of rotation of the wheel (24), said disks being rotatable within respective grooves provided in the respective second guides (28).

8. The device according to Claim 1, **characterized in that** it comprises means for interrupting cyclically advance of the continuous arrays of products in the terminal portions (12a) of the first guides (12) so as to vary the pre-set number of products (P) that make up each group (G).

## Patentansprüche

1. Vorrichtung zum Herstellen einer Gruppe von Erzeugnissen (G), die durch eine voreingestellte Anzahl von Erzeugnissen (P) gebildet wird, wobei sie umfasst:
eine Vielzahl erster stationärer Führungen (12), an denen sich jeweilige Anordnungen von Erzeugnissen (P) entlang bewegen, wobei die Erzeugnisse aneinander aufgestellt oder übereinander gestapelt sind, und jede der ersten Führungen (12) einen Endabschnitt (12a) hat, der sich von der Oberseite in Bezug auf die Richtung der Vorwärtsbewegung der Erzeugnisse (P) nach unten erstreckt;
eine Vielzahl von Entnahmevorrichtungen (16), die so eingerichtet sind, dass sie die Erzeugnisse (P) einzeln am unteren Ende der Endabschnitte (12a) entnehmen und Vorwärtsbewegung der einzelnen Erzeugnisse (P) bewirken, so dass sie in einem Abstand zueinander aufgestellt werden;
eine Vielzahl von Rädern (24), die mit jeweiligen Entnahmevorrichtungen (16) verbunden sind, wobei sich jedes der Räder um eine horizontale Achse herum drehen kann und mit einer Vielzahl von Aufnahmen (26) versehen ist, die in einer Umfangsrichtung voneinander beabstandet sind, jede der Aufnahmen (26) dazu dient, ein jeweiliges Erzeugnis (P) aufzunehmen, das von der jeweiligen Entnahmevorrichtung (16) kommt; und
eine Vielzahl zweiter stationärer Führungen (28), die mit einer Vorrichtung verbunden sind, die Vorwärtsbewegung der Erzeugnisse (32) bewirkt, wobei in jeder der zweiten Führungen (28) die Erzeugnisse (5) von einem jeweiligen Rad (24) aufeinanderfolgend abgelegt werden und die Erzeugnisse (P), die in einer der zweiten Führungen (28) abgelegt sind, neben den Erzeugnissen aufgestellt werden, die sich in den anderen zweiten Führungen (28) vorwärts bewegen, um aufeinanderfolgende Gruppen (G) von Erzeugnissen zu bilden.

2. Vorrichtung nach Anspruch 1, **dadurch gekennzeichnet, dass** die Vorrichtung zum Vorwärtsbewegen der Erzeugnisse (32) an den zweiten Führungen (28) entlang eine Vielzahl von Schubelementen (34) umfasst, die in einer Längsrichtung (X) bewegt werden können, und deren Bewegung mit der Drehbewegung der Räder (24) synchronisiert und in Phase gebracht ist.

3. Vorrichtung nach Anspruch 1, **dadurch gekennzeichnet, dass** die Entnahmevorrichtungen (16) so eingerichtet ist, dass sie bewirken, dass sich die Erzeugnisse (P) in einer Querrichtung (Y) in Bezug auf eine Längsrichtung (X) vorwärts bewegen, in der sich die kontinuierlichen Anordnungen von Erzeugnissen (P) an den ersten Führungen (12) entlang vorwärts bewegen.

4. Vorrichtung nach Anspruch 3, **dadurch gekennzeichnet, dass** die zweiten Führungen (28) so eingerichtet sind, dass sie bewirken, dass sich die Erzeugnisse (P) in einer Richtung im Wesentlichen parallel zu der Längsrichtung (X) vorwärts bewegen.

5. Vorrichtung nach Anspruch 1, **dadurch gekennzeichnet, dass** die Räder (24) so eingerichtet sind, dass sie die Erzeugnisse (P) um im Wesentlichen 90° zwischen der Position, in der die Erzeugnisse durch die jeweiligen Entnahmevorrichtungen (16) aufgenommen werden, und der Position drehen, in der die Erzeugnisse in die jeweiligen zweiten Führungen (28) abgelassen werden.

6. Vorrichtung nach Anspruch 1, **dadurch gekennzeichnet, dass** jede der zweiten Führungen (28) einen Abschnitt zum Aufnehmen der Erzeugnisse hat, der sich auf dem Weg der Bewegung der Aufnahmen (26) des jeweiligen Rades (24) befindet.

7. Vorrichtung nach Anspruch 1, **dadurch gekennzeichnet, dass** jedes der Räder (24) ein Paar dünner Scheiben umfasst, die parallel zueinander und voneinander in der Richtung der Drehachse des Rades (24) beabstandet sind, wobei die Scheiben in jeweiligen Nuten gedreht werden können, die in den jeweiligen zweiten Führungen (28) vorhanden sind.

8. Vorrichtung nach Anspruch 1, **dadurch gekennzeichnet, dass** sie eine Einrichtung umfasst, mit der zyklische Vorwärtsbewegung der kontinuierlichen Anordnungen von Erzeugnissen in den Endabschnitten (12a) der ersten Führungen (12) unterbrochen wird, um die voreingestellte Anzahl von Erzeugnissen (P) zu ändern, die jede Gruppe (G) bilden.

## Revendications

1. Dispositif pour former des groupes de produits (G) constitués par un nombre prédéterminé de produits (P), comprenant :
- une pluralité de premiers guides fixes (12), le long desquels des rangées respectives de produits (P) avancent avec les produits placés les uns contre les autres ou empilés les uns sur les autres, chacun desdits premiers guides (12) ayant une partie terminale (12a) qui s'étend de haut en bas en référence à la direction de l'avancée des produits (P) ;
- une pluralité de dispositifs extracteurs (16), agencés afin d'extraire les produits (P) individuellement au niveau de l'extrémité inférieure desdites parties terminales (12a) et afin de provoquer l'avancée des produits (P) individuels de sorte qu'ils sont placés à une certaine distance les uns des autres ;
- une pluralité de roues (24) associées aux dispositifs extracteurs (16) respectifs, dans lequel chacune desdites roues peut tourner autour d'un axe horizontal et est prévue avec une pluralité de sièges (26) espacés les uns des autres dans une direction circonférentielle, chacun desdits sièges (26) étant conçu pour recevoir un produit (P) respectif provenant du dispositif extracteur (16) respectif ; et
- une pluralité de seconds guides fixes (28) associés à un dispositif prévu pour provoquer l'avancée des produits (32), dans lequel dans chacun desdits seconds guides (28), on dépose en succession les produits (P) d'une roue (24) respective, et dans lequel les produits (P) déposés dans l'un desdits seconds guides (28) sont placés le long des produits avançant dans les autres seconds guides (28) afin de former des groupes (G) successifs de produits.

2. Dispositif selon la revendication 1, **caractérisé en ce que** ledit dispositif pour l'avancée des produits (32) le long des seconds guides (28) comprend une pluralité d'éléments de poussée (34), qui sont mobiles dans une direction longitudinale (X) et dont le mouvement est synchronisé et en phase avec le mouvement de rotation desdites roues (24).

3. Dispositif selon la revendication 1, **caractérisé en ce que** lesdits dispositifs extracteurs (16) sont agencés pour amener les produits (P) à avancer dans une direction transversale (Y) par rapport à une direction longitudinale (X) dans laquelle les rangées continues de produits (P) avancent le long desdits premiers guides (12).

4. Dispositif selon la revendication 3, **caractérisé en ce que** lesdits seconds guides (28) sont agencés pour amener les produits (P) à avancer dans une direction sensiblement parallèle à ladite direction longitudinale (X).

5. Dispositif selon la revendication 1, **caractérisé en ce que** lesdites roues (24) sont agencées pour faire tourner les produits (P) sensiblement à 90° entre la position dans laquelle les produits sont reçus par les dispositifs extracteurs (16) respectifs et la position dans laquelle les produits sont libérés dans les seconds guides (28) respectifs.

6. Dispositif selon la revendication 1, **caractérisé en ce que** chacun desdits seconds guides (28) a une partie pour recevoir les produits qui est placée sur la trajectoire de mouvement des sièges (26) de la roue (24) respective.

7. Dispositif selon la revendication 1, **caractérisé en ce que** chacune desdites roues (24) comprend une paire de disques fins parallèles l'un par rapport à l'autre et espacés l'un de l'autre dans la direction de l'axe de rotation de la roue (24), lesdits disques pouvant tourner à l'intérieur de rainures respectives prévues dans les seconds guides (28) respectifs.

8. Dispositif selon la revendication 1, **caractérisé en ce qu'**il comprend des moyens pour interrompre de manière cyclique l'avancée des rangées continues de produits dans les parties terminales (12a) des premiers guides (12) afin de modifier le nombre prédéterminé de produits (P) qui composent chaque groupe (G).
